# EUROPÄISCHE PATENTSCHRIFT

(11) **EP 1 847 432 B1**
(45) Veröffentlichungstag und Bekanntmachung des Hinweises auf die Patenterteilung: **15.08.2018**
(21) Anmeldenummer: 07008176.5
(22) Anmeldetag: 23.04.2007
(51) Int. Cl.: B60T 13/36, B60T 13/68

(54) **Direkte Bremsvorrichtung eines Schienenfahrzeugs mit elektronischer Regelung und zusätzlichem elektro-pneumatischen Kreis**
Direct braking device of a rail vehicle with electronic actuation and additional electro-pneumatic cycle
Dispositif de freinage direct d'un véhicule sur rail doté d'un régulateur électronique et d'un circuit électropneumatique supplémentaire

(30) Priorität: 21.04.2006 DE 102006018554
(43) Veröffentlichungstag der Anmeldung: 24.10.2007
(73) Patentinhaber: KNORR-BREMSE Systeme für Schienenfahrzeuge GmbH, 80809 München (DE)
(72) Erfinder: Furtwängler, Ralf, 80689 München (DE); Huber, Jürgen, Dr., 82008 Unterhaching (DE)
(74) Vertreter: Schönmann, Kurt

(56) Entgegenhaltungen:
- EP-A1- 0 103 716
- EP-A1- 0 438 678
- EP-A1- 0 547 407
- EP-A1- 0 616 930
- EP-A2- 0 922 618
- GB-A- 2 224 322
- US-A- 5 332 297

## Beschreibung

### Stand der Technik

Die Erfindung geht aus von einer direkten Bremsvorrichtung eines Schienenfahrzeugs, bei welcher zum Zuspannen der Bremse Druckluft aus wenigstens einem Druckluftspeicher in wenigstens einen Bremszylinder eingespeist und zum Lösen der Bremse der wenigstens eine Bremszylinder entlüftet wird, beinhaltend folgendes :
a) Eine Bremsbetätigungseinrichtung mit wenigstens einem Bedienhebel, welche abhängig von der Stellung des Bedienhebels elektrische Steuersignale aussteuert,
b) eine direkte elektronische Bremseinrichtung, bei welcher ein elektronisches Steuergerät abhängig von den von der Bremsbetätigungseinrichtung ausgesteuerten elektrischen Steuersignalen eine erste Steuerventileinrichtung zur Erzeugung eines geregelten pneumatischen Steuersignals ansteuert,
c) eine direkte elektro-pneumatische Bremseinrichtung, welche abhängig von den von der Bremsbetätigungseinrichtung ausgesteuerten elektrischen Steuersignalen aus dem Vorratsdruck eines Druckluftspeichers ein weiteres pneumatisches Steuersignal erzeugt, beinhaltend ein vom Druckspeicher gespeistes Druckminderventil,
d) eine zweite Steuerventileinrichtung, die abhängig von einem pneumatischen Steuersignal aus einem von einem Druckluftspeicher abgeleiteten Vorratsdruck einen Bremsdruck für den wenigstens einen Bremszylinder erzeugt, wobei
e) eine Umschaltventileinrichtung vorgesehen ist, welche das geregelte pneumatische Steuersignal der direkten elektronischen Bremseinrichtung oder das weitere pneumatische Steuersignal der direkten elektro-pneumatischen Bremseinrichtung an die zweite Steuerventileinrichtung weiterschaltet,
gemäß dem Oberbegriff von Anspruch 1. Ein derartiges Beispiel vom Stand der Technik ist im Patentdokument EP 0 547 407 enthalten.

Bremssysteme von Triebwagen oder Lokomotiven weisen häufig eine Kombination einer direkten unselbständigen Bremse und einer indirekten selbständigen Bremse auf. Bei der direkten, selbständigen Bremse kommt eine Bremsung dadurch zustande, dass Druckluft aus einem Hauptluftbehälter über ein Zusatzbremsventil direkt in den Bremszylinder gelangt. Da im Zusatzbremsventil keine Druckreduzierung erfolgt, muss der Druck durch einen Druckbegrenzer reduziert werden. Da im Falle von Zugtrennungen sowohl die Bremsleitung als auch alle Bremszylinder ins Freie entlüften, sind wegen der offenen Bremskupplungen beide Zugteile nicht mehr mit Druckluft füllbar und daher nicht mehr bremsbar. Ebenso fällt bei Undichtigkeit an einer Stelle die Bremsanlage des ganzen Zuges aus. Als Zugbremse ist die direkte Bremse daher nicht brauchbar. Sie wird aber heute noch als Zusatzbremse in Triebfahrzeugen oder Lokomotiven eingesetzt und dort hauptsächlich im Rangierbetrieb oder als Haltebremse verwendet.

Für Zugbremsen hat sich die indirekt wirkende Bremse durchgesetzt, welche dadurch gekennzeichnet ist, dass in einer Hauptluftleitung ein definierter Regelbetriebsdruck (bei UIC 5 · 10⁵ Pa) bei gelöster Bremse aufrechterhalten wird. Zum Zuspannen der Bremse wird der Druck in der Hauptluftleitung abgesenkt. Bei einer bekannten gattungsgemäßen direkten elektronischen Bremseinrichtung mit Bremsdruckregelung gemäß Merkmal b) von Anspruch 1 führt ein Ausfall der elektrischen Steuerung zum Verlust der direkten Bremse in einem Drehgestell, was aus Sicherheitsgründen auf wenig Akzeptanz stößt. Deshalb wird zusätzlich zu solchen elektronischen Bremseinrichtungen in der Regel eine redundante Bremseinrichtung ohne Elektronikanteil vorgesehen, bevorzugt in Form einer direkten elektro-pneumatische Bremseinrichtung gemäß Merkmal c) von Anspruch 1.

Die bekannte direkte pneumatische Bremseinrichtung weist neben dem Druckminderventil in der Regel ein diesem nachgeschaltetes Bremsventil zum Belüften des Steuereingangs der zweiten Steuerventileinrichtung und ein Löseventil zum Entlüften des Steuereingangs auf, wobei das Bremsventil und das Löseventil jeweils von einem eigenen elektrischen Bremszuspannkreis und Bremslösekreis der Bremsbetätigungseinrichtung elektrisch angesteuert werden. Durch ein Wechselventil, beispielsweise ein Doppelrückschlagventil erfolgt die Trennung zur elektronischen Bremseinrichtung, indem das Wechselventil das jeweils größere pneumatische Steuersignal an den Steuereingang der zweiten Steuerventileinrichtung durchsteuert. Bei einem Ausfall der elektronischen Bremseinrichtung ist das von der ersten Steuerventileinrichtung ausgesteuerte geregelte pneumatische Steuersignal niedriger als das von der elektro-pneumatischen Bremseinrichtung ausgesteuerte pneumatische Steuersignal, wobei Letzteres dann von dem Wechselventil an den Steuereingang der zweiten Steuerventileinrichtung durchgeschaltet wird.

Die als Redundanz dienende zusätzliche elektro-pneumatische Bremseinrichtung umfasst das Bremsventil und das Löseventil sowie das Wechselventil samt Verrohrung, was einen gewissen Herstell- und Fertigungsaufwand bedingt.

Der Erfindung liegt demgegenüber die Aufgabe zugrunde, eine direkte Bremsvorrichtung eines Schienenfahrzeugs der eingangs erwähnten Art derart weiter zu bilden, dass sie einfacher aufgebaut und kostengünstiger zu fertigen ist.

Erfindungsgemäß wird diese Aufgabe durch die Merkmale von Patentanspruch 1 gelöst.

### Vorteile der Erfindung

Die Erfindung basiert auf dem Gedanken, dass die Umschaltventileinrichtung ein von der Bremsbetätigungseinrichtung elektrisch ansteuerbares Magnetventil beinhaltet, welches einen Steuereingang der zweiten Steuerventileinrichtung entweder direkt mit einem Druckausgang des Druckminderventils oder mit einem Ausgang der ersten Steuerventileinrichtung verbindet. Dann entfallen das Bremsventil, das Löseventil sowie das Wechselventil des Stands der Technik, was einen wesentlich einfacheren Aufbau der Bremsanlage bedingt. Die geringere Anzahl von Komponenten reduziert außerdem die Ausfallwahrscheinlichkeit und vereinfacht den Sicherheitsnachweis der Bremsvorrichtung.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer bevorzugten Maßnahme beinhaltet die Bremsbetätigungseinrichtung wenigstens folgendes:
a) Einen elektrischen Bremszuspannkreis, bei welchem bei Betätigung des Bedienhebels ausgehend von einer Neutralstellung bis zu einem definierten Betätigungsweg in einer Richtung abhängig von der Betätigungsdauer oder vom Betätigungsweg ein elektrisches Signal zum Zuspannen der Bremse im Rahmen einer Betriebsbremsung erzeugt,
b) einen elektrischen Bremslösekreis, bei welchem bei Betätigung des Bedienhebels ausgehend von der Neutralstellung bis zu einem definierten Betätigungsweg in einer weiteren Richtung abhängig von der Betätigungsdauer oder vom Betätigungsweg ein elektrisches Signal zum Lösen der Bremse erzeugt, sowie
c) einen elektrischen Festhaltebremskreis, bei welchem bei Betätigung des Bedienhebels in der einen Richtung oder in der anderen Richtung über den jeweiligen definierten Betätigungsweg hinaus ein elektrisches Signal zum Zuspannen der Bremse im Rahmen einer Festhaltebremsung erzeugt.

Dabei kann der Bedienhebel von der Neutralstellung bis zu dem definierten Betätigungsweg, d.h. im Betriebsbrems- oder Lösefall unrastiert und über den definierten Betätigungsweg hinaus, d.h. zum Festhalte- oder Notbremsen rastiert betätigbar sein.

Ein Umschalten von der elektronischen Bremseinrichtung auf die elektro-pneumatische Bremseinrichtung ist immer dann angezeigt, wenn die elektronische Bremseinrichtung eine Störung aufweist oder total versagt. Dies äußert sich in einem Nachlassen der Bremsleistung bzw. in geringen Bremskräften während einer Betriebsbremsung trotz hoher Bremsanforderung, was vom Triebfahrzeugführer bemerkt wird, wenn er den Bedienhebel der Betätigungseinrichtung von der Neutralstellung bis zu dem definierten Betätigungsweg in Bremszuspannrichtung betätigt. Die elektronische Bremseinrichtung kann wegen des Elektronikausfalls oder -defekts dann das gemäß der Bremsanforderung erforderliche pneumatische Steuersignal für die zweite Steuerventileinrichtung nicht mehr in entsprechender Höhe bzw. überhaupt nicht mehr erzeugen.

Wenn gemäß einer besonders zu bevorzugenden Ausführungsform der Erfindung das Magnetventil der Umschalteinrichtung von einem vom Festhaltebremskreis der Bremsbetätigungseinrichtung ausgesteuerten elektrischen Signal angesteuert wird, kann der Triebfahrzeugführer, wenn er einen Defekt aufgrund nachlassender Bremswirkung vermutet oder wenn ein er ein entsprechendes, automatisch erzeugtes Signal erhält, daraufhin den Bedienhebel über den definierten Betätigungsweg hinaus in den rastierten Bereich hinein betätigen, welcher die Festhaltebremse oder Notbremse aktiviert. Das elektrische Signal des Festhaltebremskreises, welches in einer Bestromung oder Entstromung bestehen kann und beispielsweise von einem separaten elektrischen Schalter in der Bremsbetätigungseinrichtung erzeugt wird, bewirkt ein Umschalten des Magnetventils, so dass das pneumatische Steuersignal, welches die zweite Steuerventileinrichtung ansteuert, nun nicht mehr von der defekten elektronischen Bremseinrichtung, sondern von der elektro-pneumatischen Bremseinrichtung gebildet wird. Dieses weitere pneumatische Steuersignal sorgt dann in der zweiten Steuerventileinrichtung für die Bildung des Bremsdrucks.

Zur Erzeugung des weiteren pneumatischen Steuersignals der elektro-pneumatischen Bremseinrichtung und zur Vermeidung von Überbremsungen, welche unerwünschten Flachstellen an den Rädern erzeugen, wird der Vorratsdruck des Druckluftspeichers durch das Druckminderventil auf einen gewünschten konstanten Wert eingesteuert und dann direkt in den Steuereingang der zweiten Steuerventileinrichtung eingespeist, welche beispielsweise ein Relaisventil beinhaltet und dann abhängig von dem weiteren pneumatischen Steuersignal den Bremsdruck für die Bremszylinder erzeugt. Dieser dann ebenfalls konstante Bremsdruck sorgt für ein sicheres Einbremsen und Festhalten des Zuges in der eingebremsten Stellung.

Das Magnetventil der Umschalteinrichtung wird bevorzugt durch ein 3/2-Wegemagnetventil gebildet, von welchem ein Druckeingang mit dem Ausgang der ersten Steuerventileinrichtung, ein weiterer Druckeingang direkt mit dem Druckausgang des Druckminderventils und ein Druckausgang mit dem Steuereingang der zweiten Steuerventileinrichtung in Verbindung steht. Im bestromten Zustand könnte dann beispielsweise das geregelte pneumatische Steuersignal der elektronischen Bremseinrichtung, im unbestromten Zustand das weitere pneumatische Steuersignal der elektro-pneumatischen Bremseinrichtung an den Steuereingang der zweiten Steuerventileinrichtung weitergeschaltet werden.

Besonders bevorzugt wird eine Gleitschutzeinrichtung der Bremsvorrichtung außer Betrieb gesetzt, wenn der Bremsdruck aus dem weiteren pneumatischen Steuersignal der elektro-pneumatischen Bremseinrichtung gebildet wird. Dadurch hat die Elektronik der elektronischen Bremseinrichtung, von deren Defekt in diesem Falle ausgegangen wird, keinen Einfluss mehr auf die Abbremsung des Zuges.

### Zeichnung

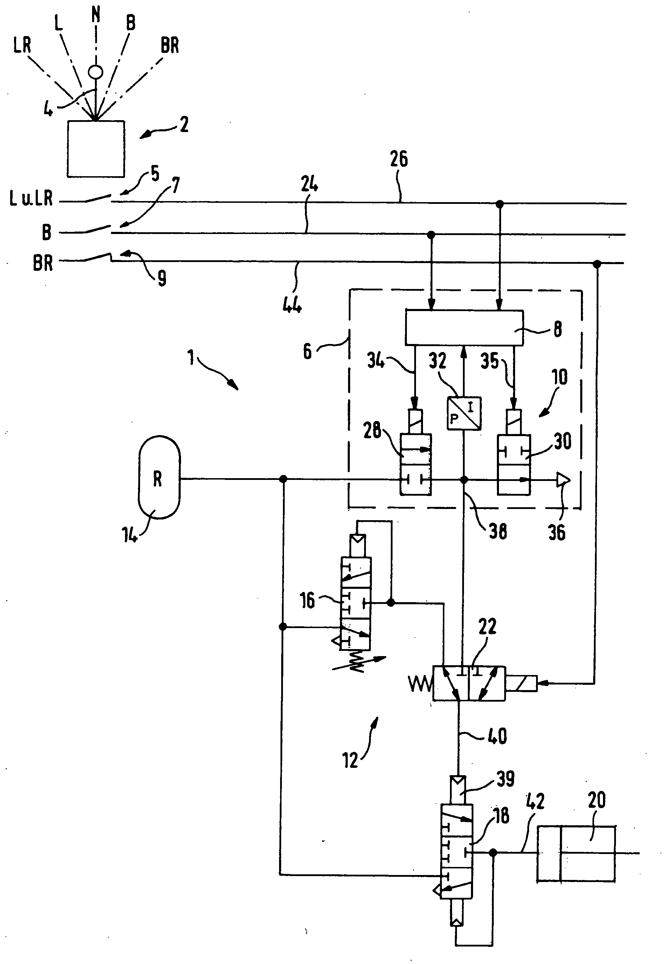

Ein Ausführungsbeispiel der Erfindung ist in der Zeichnung dargestellt und in der nachfolgenden Beschreibung näher erläutert. In der Zeichnung zeigt die einzige Figur einen Schaltplan einer Bremsvorrichtung gemäß einer bevorzugten Ausführungsform der Erfindung.

### Beschreibung des Ausführungsbeispiels

In der Figur ist mit der Bezugszahl 1 eine direkte Bremsvorrichtung eines Schienenfahrzeugs gemäß einer bevorzugten Ausführungsform der Erfindung bezeichnet. Diese beinhaltet wenigstens folgendes :
a) Eine Bremsbetätigungseinrichtung 2 mit wenigstens einem handbetätigbaren Bedienhebel 4, welche abhängig von der Stellung des Bedienhebels 4 elektrische Steuersignale aussteuert,
b) Eine direkte elektronische Bremseinrichtung 6, bei welcher ein elektronisches Steuergerät 8 abhängig von den von der Bremsbetätigungseinrichtung 2 ausgesteuerten elektrischen Steuersignalen eine erste Steuerventileinrichtung 10 zur Erzeugung eines geregelten pneumatischen Steuersignals ansteuert,
c) eine direkte elektro-pneumatische Bremseinrichtung 12, welche abhängig von den von der Bremsbetätigungseinrichtung 2 ausgesteuerten elektrischen Steuersignalen aus dem Vorratsdruck R eines Druckluftspeichers 14 ein weiteres pneumatisches Steuersignal erzeugt, beinhaltend ein vom Druckspeicher 14 gespeistes Druckminderventil 16,
d) eine zweite Steuerventileinrichtung 18, die abhängig von einem pneumatischen Steuersignal aus einem von dem Druckluftspeicher 14 abgeleiteten Vorratsdruck R einen Bremsdruck für den wenigstens einen Bremszylinder 20 erzeugt, wobei
e) eine Umschaltventileinrichtung 22 vorgesehen ist, welche das geregelte pneumatische Steuersignal der elektronischen Bremseinrichtung 6 oder das weitere pneumatische Steuersignal der elektro-pneumatischen Bremseinrichtung 12 an die zweite Steuerventileinrichtung 18 weiterschaltet.

Die Bremsbetätigungseinrichtung 2 ist vorzugsweise eine stellungsabhängige Bremsbetätigungseinrichtung und umfasst:
a) Einen elektrischen Bremszuspannkreis, in welchem bei Betätigung des Bedienhebels 4 ausgehend von einer Neutralstellung N bis zu einem definierten Betätigungsweg B in einer Richtung abhängig von der Betätigungsdauer ein elektrisches Signal zum Zuspannen der Bremse im Rahmen einer Betriebsbremsung erzeugt wird,
b) einen elektrischen Bremslösekreis, in welchem bei Betätigung des Bedienhebels 4 ausgehend von der Neutralstellung N bis zu einem definierten Betätigungsweg L in einer weiteren Richtung abhängig von der Betätigungsdauer oder vom Betätigungsweg ein elektrisches Signal zum Lösen der Bremse erzeugt wird, sowie
c) einen elektrischen Festhaltebremskreis, in welchem bei Betätigung des Bedienhebels 4 in der einen Richtung oder in der anderen Richtung über den jeweiligen definierten Betätigungsweg hinaus ein elektrisches Signal zum Zuspannen der Bremse im Rahmen einer Festhalte- oder Notbremsung erzeugt wird.

Dabei wird der Bedienhebel 4 zum Betriebsbremsen aus der Neutralstellung N in der Figur nach rechts in die Stellung B für Bremsen geschwenkt. Analoges gilt für das Lösen der Bremse, wobei der Bedienhebel 4 hierzu in Gegenrichtung, d.h. in der Figur nach links aus der Neutralstellung N in die Stellung L für Lösen geschwenkt wird. Die Größe der Brems- oder Lösestufe ist dabei beispielsweise von der Stellung des Bedienhebels 4 abhängig, wobei die Brems- und Lösestellung getastet und unrastiert ausgeführt ist. Nach Loslassen des Bedienhebels 4 kehrt dieser automatisch in die Neutralstellung N zurück. Wird der Bedienhebel 4 über einen definierten Betätigungsweg hinaus betätigt, welcher in der Figur durch die Stellungen B und L gekennzeichnet ist, wodurch eine Festhalte- oder Notbremsung ausgelöst wird, so ist er beispielsweise rastiert betätigt, d.h. seine jeweilige Drehstellung ist durch eine Rastierung arretierbar. Alternativ könnte die Bremsbetätigungseinrichtung 2 auch zeitabhängig ausgeführt sein. In diesem Fall ist die Größe der Brems- und Lösestufe von der Dauer des Verbleibs des Bedienhebels 4 in der Brems- oder Lösestellung abhängig.

Die oben genannten elektrischen Bremskreise sind voneinander unabhängig, wobei jedem Bremskreis vorzugsweise ein eigener elektrischer Kontaktschalter 5, 7, 9 zugeordnet ist, welcher abhängig von der Betätigungsdauer des Bedienhebels 4 in der jeweiligen Richtung ein entsprechendes elektrisches Signal erzeugt. Die elektrischen Signale des Bremslösekreises und des Bremszuspannkreises werden dann über elektrische Leitungen 24, 26 in ein Steuergerät 8 der elektronischen Bremseinrichtung 6 eingesteuert. Anstatt der beschriebenen zeitabhängigen Steuerung könnten alternativ die elektrischen Signale der Bremskreise auch abhängig von der jeweiligen Drehstellung des Bedienhebels 4 erzeugt werden.

Das elektronische Steuergerät 8 steuert die elektronische Bremseinrichtung 6, welche weiterhin wenigstens ein Bremsventil 28, ein Löseventil 30 und einen Drucksensor 32 umfasst. Genauer werden das Bremsventil 28 und das Löseventil 30, welche beispielsweise jeweils durch ein 2/2-Wegemagnetventil gebildet werden, vom Steuergerät 8 über je eine elektrische Steuerleitung 34, 35 angesteuert. Ein Druckeingang des Bremsventils 28 steht mit dem unter Vorratsdruck R stehenden Druckluftspeicher 14 in Verbindung, sein Druckausgang mit einem Druckeingang des Löseventils 30, dessen Druckausgang wiederum in eine Drucksenke oder Entlüftung 36 mündet. Über eine Druckausgangsleitung 38 der elektronischen Bremseinrichtung 6 stehen der Druckausgang des Bremsventils 28 und der Druckeingang des Löseventils 30 mit einem Eingang der Umschaltventileinrichtung 22 in Strömungsverbindung, welche vorzugsweise durch ein 3/2-Wegemagnetventil gebildet wird. In der durchgeschalteten Stellung verbindet das Bremsventil 28 folglich die Druckausgangsleitung 38 mit dem Druckluftspeicher 14 und das Löseventil 30 die Druckausgangsleitung 38 mit der Entlüftung 36.

Der in der Druckausgangsleitung 38 herrschende Steuerdruck wird von dem Drucksensor 32 gemessen und ein entsprechendes elektrisches Signal in das Steuergerät 8 eingesteuert, welche den gemessenen Steuerdruck-Istwert mit einem der jeweiligen Bremsanforderung entsprechenden Steuerdruck-Sollwert vergleicht, wobei die Bremsanforderung durch das über die entsprechende elektrische Leitung 24, 26 an das Steuergerät 8 herangeführte und von der Bremsbetätigungseinrichtung 2 erzeugte elektrische Signal repräsentiert wird. Regelabweichungen werden dann durch ein entsprechendes Öffnen bzw. Schließen des Bremsventils 28 bzw. Löseventils 30 ausgeglichen, wobei die Ventile 28, 30 hierzu auch getaktet angesteuert werden können.

Ergebnis ist ein geregelter pneumatischer Steuerdruck für den Steuereingang 39 der zweiten Steuerventileinrichtung 18, welche vorzugsweise durch ein Relaisventil gebildet wird. Hierzu steht der Steuereingang 39 des Relaisventils 18 über eine Druckleitung 40 mit einem Ausgang des 3/2-Wegemagnetventils 22 in Verbindung und ist eingangsseitig mit dem Druckluftspeicher 14 verbunden. Ein Ausgang oder Arbeitsanschluss des Relaisventils 18 ist über eine weitere Druckleitung 42 mit einem oder mehreren Bremszylindern 20 eines Drehgestells des Schienenfahrzeugs verbunden.

Weiterhin steht der Druckluftspeicher 14 mit einem Druckeingang des Druckminderventils 16 in Verbindung, dessen Ausgang mit einem weiteren Eingang des 3/2-Wegeventils 22 verbunden ist. Das Druckminderventil 16 reduziert den im Druckluftspeicher 14 herrschenden Vorratsdruck R auf einen einstellbaren, konstanten Steuerdruck für das Relaisventil 18. Das 3/2-Wegemagnetventil 22 wird vom Feststellbremskreis über eine weitere elektrische Leitung 44 angesteuert.

Vor diesem Hintergrund ist die Funktionsweise der erfindungsgemäßen Bremsvorrichtung 1 wie folgt:
Im Normalbetrieb, d.h. bei intakter elektronischer Bremseinrichtung 6 steuert das elektronische Steuergerät 8 abhängig von den von der Bremsbetätigungseinrichtung 2 ausgesteuerten elektrischen Steuersignalen das Bremsventil 28 und das Löseventil 30 zur Erzeugung eines geregelten pneumatischen Steuersignals für das Relaisventil 18 an, welches daraufhin abhängig von diesem Steuersignal aus dem Vorratsdruck R einen Bremsdruck für die Bremszylinder 20 moduliert.

Ein Umschalten von der elektronischen Bremseinrichtung 6 auf die elektro-pneumatische Bremseinrichtung 12 ist immer dann angezeigt, wenn die elektronische Bremseinrichtung 6 eine Störung aufweist oder total versagt. Dies äußert sich in einem Nachlassen der Bremsleistung bzw. geringen Bremskräften während einer Betriebsbremsung trotz hoher Bremsanforderung, was vom Triebfahrzeugführer bemerkt wird, wenn er den Bedienhebel 4 der Bremsbetätigungseinrichtung 2 von der Neutralstellung N in Bremszuspannrichtung in die Stellung B betätigt. Die elektronische Bremseinrichtung 6 kann wegen des Elektronikausfalls oder -defekts, beispielsweise im Steuergerät 8, dann das gemäß der Bremsanforderung erforderliche pneumatische Steuersignal für das Relaisventil 18 nicht mehr in entsprechender Höhe bzw. überhaupt nicht mehr erzeugen.

Wenn der Triebfahrzeugführer daher einen Defekt durch nachlassende Bremswirkung vermutet oder wenn ein er ein entsprechendes, automatisch erzeugtes Signal erhält, wird er den Bedienhebel 4 über den definierten Betätigungsweg B hinaus in den rastierten Bereich hinein betätigen, welcher die Festhaltebremse oder Notbremse aktiviert, beispielsweise bis zur Stellung BR (Bremsen rastiert). Alternativ kann er in diesem Fall den Bedienhebel 4 auch lediglich bis in die unrastierte Bremsstellung B betätigen.

Das daraufhin erzeugte elektrische Umschaltsignal des Festhaltebremskreises, welches über die elektrische Leitung 44 geleitet und vorzugsweise in einer Bestromung des 3/2-Wegeventils 22 besteht, bewirkt ein Umschalten des 3/2-Wegeventils 22 in die Stellung, wie sie in der Figur gezeigt ist und in welcher die Druckausgangsleitung 38 der elektronischen Bremseinrichtung 6 gesperrt, aber der Ausgang des Druckminderventils 16 zum Steuereingang 39 des Relaisventils 18 durchgeschaltet ist. Daher stammt das pneumatische Steuersignal, welches das Relaisventil 18 ansteuert, nun nicht mehr von der defekten elektronischen Bremseinrichtung 6, sondern von der elektro-pneumatischen Bremseinrichtung 12. Dieses weitere pneumatische Steuersignal sorgt dann im Relaisventil 18 für die Bildung des Bremsdrucks.

Zur Erzeugung des weiteren pneumatischen Steuersignals der elektro-pneumatischen Bremseinrichtung 12 wird zur Vermeidung von Überbremsungen, welche unerwünschte Flachstellen an den Rädern erzeugen, der Vorratsdruck R des Druckluftspeichers 14 durch das diesem nachgeschaltete Druckminderventil 16 auf einen gewünschten und einstellbaren konstanten Wert eingesteuert und dann direkt in den Steuereingang 39 des Relaisventils 18 eingespeist, welches dann hiervon abhängig den Bremsdruck für die Bremszylinder 20 erzeugt. Dieser dann ebenfalls konstante Bremsdruck sorgt für das Einbremsen und Festhalten des Zuges in der eingebremsten Stellung.

Sofern die Bremsvorrichtung 1 über eine Gleitschutzeinrichtung verfügt, wird diese automatisch außer Betrieb gesetzt, wenn der Bremsdruck aus dem weiteren pneumatischen Steuersignal der elektro-pneumatischen Bremseinrichtung 12 gebildet wird. Dies ist bevorzugt dann der Fall, wenn der Bedienhebel 4 in die rastierte Stellung BR betätigt wird, um das elektrische Umschaltsignal für das 3/2-Wegemagnetventil 22 zu erzeugen. Dadurch hat die Elektronik der elektronischen Bremseinrichtung 6, von deren Defekt in diesem Falle ausgegangen wird, keinen Einfluss mehr auf die Abbremsung des Zuges.

Wird das 3/2-Wegemagnetventil 22 auch in der unrastierten Bremsstellung B angesteuert, so ist das Ansteuervolumen des 3/2-Wegemagnetventils mit dessen Bedüsung so abzustimmen, dass die geforderten Gradienten für die direkte Bremse erfüllt werden. Die elektronische Bremseinrichtung 6 korrigiert nach Rückkehr des Bedienhebels 4 in die Neutralstellung N den aufgebauten Druck gemäß einer gewünschten Kennlinie und hält zudem den Vorsteuerdruck oder das pneumatische Steuersignal auch bei vorhandenen Undichtigkeiten konstant.

### Bezugszahlenliste

- 1: Bremsvorrichtung
- 2: Bremsbetätigungseinrichtung
- 4: Bedienhebel
- 5: Kontaktschalter
- 6: elektronische Bremseinrichtung
- 7: Kontaktschalter
- 8: Steuergerät
- 9: Kontaktschalter
- 10: Steuerventileinrichtung
- 12: elektro-pneumatische Bremseinrichtung
- 14: Druckluftspeicher
- 16: Druckminderventil
- 18: Relaisventil
- 20: Bremszylinder
- 22: 3/2-Wegemagnetventil
- 24: elektr. Leitung
- 26: elektr. Leitung
- 28: Bremsventil
- 30: Löseventil
- 32: Drucksensor
- 34: Steuerleitung
- 35: elektr.Leitung
- 36: Entlüftung
- 38: Druckausgangsleitung
- 39: Steuereingang
- 40: Druckleitung
- 42: Druckleitung
- 44: elektr. Leitung

## Patentansprüche

1. Direkte Bremsvorrichtung (1) eines Schienenfahrzeugs, bei welcher zum Zuspannen der Bremse Druckluft aus wenigstens einem Druckluftspeicher (14) in wenigstens einen Bremszylinder (20) eingespeist und zum Lösen der Bremse der wenigstens eine Bremszylinder (20) entlüftet wird, beinhaltend folgendes :
a) Eine Bremsbetätigungseinrichtung (2) mit wenigstens einem Bedienorgan (4), welche abhängig von der Stellung des Bedienorgans (4) elektrische Steuersignale aussteuert,
b) eine direkte elektronische Bremseinrichtung (6), bei welcher ein elektronisches Steuergerät (8) abhängig von den von der Bremsbetätigungseinrichtung (2) ausgesteuerten elektrischen Steuersignalen eine erste Steuerventileinrichtung (10, 28, 30) zur Erzeugung eines geregelten pneumatischen Steuersignals ansteuert,
c) eine direkte elektro-pneumatische Bremseinrichtung (12), welche abhängig von den von der Bremsbetätigungseinrichtung (2) ausgesteuerten elektrischen Steuersignalen aus dem Vorratsdruck (R) eines Druckluftspeichers (14) ein weiteres pneumatisches Steuersignal erzeugt, beinhaltend ein vom Druckluftspeicher (14) gespeistes Druckminderventil (16),
d) eine zweite Steuerventileinrichtung (18), die abhängig von einem pneumatischen Steuersignal aus einem von einem Druckluftspeicher (14) abgeleiteten Vorratsdruck einen Bremsdruck für den wenigstens einen Bremszylinder (20) erzeugt, wobei
e) eine Umschaltventileinrichtung (22) vorgesehen ist, welche das geregelte pneumatische Steuersignal der direkten elektronischen Bremseinrichtung (6) oder das weitere pneumatische Steuersignal der direkten elektro-pneumatischen Bremseinrichtung (12) an die zweite Steuerventileinrichtung (18) weiterschaltet, **dadurch gekennzeichnet, dass**
f) die Umschaltventileinrichtung (22) ein von der Bremsbetätigungseinrichtung (2) elektrisch ansteuerbares Magnetventil beinhaltet, welches einen Steuereingang (39) der zweiten Steuerventileinrichtung (18) entweder direkt mit einem Druckausgang des Druckminderventils (16) oder mit einem Ausgang (38) der ersten Steuerventileinrichtung (10, 28, 30) verbindet.

2. Direkte Bremsvorrichtung nach Anspruch 1, **dadurch gekennzeichnet, dass** das Magnetventil (22) durch ein 3/2-Wegemagnetventil gebildet wird, von welchem ein Druckeingang mit dem Ausgang (38) der ersten Steuerventileinrichtung (10), ein weiterer Druckeingang direkt mit dem Druckausgang des Druckminderventils (16) und ein Druckausgang mit dem Steuereingang (39) der zweiten Steuerventileinrichtung (18) in Verbindung steht.

3. Direkte Bremsvorrichtung nach Anspruch 1 oder 2, **dadurch gekennzeichnet, dass** die Bremsbetätigungseinrichtung (2) wenigstens folgendes beinhaltet:
a) Einen elektrischen Zuspannkreis, in welchem bei Betätigung des Bedienorgangs (4) ausgehend von einer Neutralstellung (N) bis zu einem definierten Betätigungsweg (B) in einer Richtung abhängig von der Betätigungsdauer oder vom Betätigungsweg ein elektrisches Signal zum Zuspannen der Bremse im Rahmen einer Betriebsbremsung erzeugt wird,
b) einen elektrischen Bremslösekreis, in welchem bei Betätigung des Bedienorgans (4) ausgehend von der Neutralstellung (N) bis zu einem definierten Betätigungsweg (L) in einer weiteren Richtung abhängig von der Betätigungsdauer oder vom Betätigungsweg ein elektrisches Signal zum Lösen der Bremse erzeugt wird, sowie
c) einen elektrischen Festhaltebremskreis, in welchem bei Betätigung des Bedienorgans (4) in der einen Richtung oder in der anderen Richtung über den jeweiligen definierten Betätigungsweg hinaus ein elektrisches Signal zum Zuspannen der Bremse im Rahmen einer Festhalte- oder Notbremsung erzeugt wird.

4. Direkte Bremsvorrichtung nach Anspruch 3, **dadurch gekennzeichnet, dass** der Bedienhebel (4) von der Neutralstellung (N) bis zu dem definierten Betätigungsweg (B, L) unrastiert und über den definierten Betätigungsweg hinaus (BL, BR) rastiert betätigbar ist.

5. Direkte Bremsvorrichtung nach Anspruch 3 oder 4, **dadurch gekennzeichnet, dass** das Magnetventil (22) von einem vom Festhaltebremskreis der Bremsbetätigungseinrichtung (2) ausgesteuerten elektrischen Signal angesteuert ist.

6. Direkte Bremsvorrichtung nach wenigstens einem der vorhergehenden Ansprüche, **dadurch gekennzeichnet, dass** bei einer Ansteuerung der zweiten Steuerventileinrichtung (18) durch das weitere pneumatische Steuersignal gleichzeitig eine Gleitschutzeinrichtung außer Betrieb gesetzt.

7. Direkte Bremsvorrichtung nach wenigstens einem der vorhergehenden Ansprüche, **dadurch gekennzeichnet, dass** die zweite Steuerventileinrichtung (18) wenigstens ein Relaisventil beinhaltet, welches abhängig von dem pneumatischen Steuersignal aus dem Vorratsdruck (R) einen Bremsdruck moduliert.

## Claims

1. A direct braking device (1) of a rail vehicle, in which compressed air is fed from at least one compressed air reservoir (14) into at least one brake cylinder (20) in order to apply the brake and is bled from the at least one brake cylinder (20) in order to release the brake, comprising the following:
a) a brake actuating device (2) comprising at least one operating member (4) which adjusts electrical control signals dependent on the position of the operating member (4),
b) a direct electronic braking device (6) in which an electronic control device (8) activates a first control valve device (10, 28, 30) to generate a regulated pneumatic control signal dependent on the electrical control signals adjusted by the brake actuating device (20),
c) a direct electro-pneumatic braking device (12) which generates a further pneumatic control signal from the reservoir pressure (R) of a compressed air reservoir (14) dependent on the control signals adjusted by the brake actuation device (2) and which contains a pressure reduction valve (16) fed by the compressed air reservoir (14),
d) a second control valve device (18) which generates a braking pressure for the at least one brake cylinder (20) from a reservoir pressure derived from a compressed air reservoir (14) dependent on a pneumatic control signal,
e) there being provided a switch valve device (22) which forwards the regulated pneumatic control signal of the direct electronic braking device (6) or the further pneumatic control signal of the direct electro-pneumatic braking device (12) to the second control valve device (18), **characterised in that**
f) the switch valve device (22) contains a solenoid valve which can be activated electrically by the brake actuating device (2) and which connects a control input (39) of the second valve device (18) either directly to a pressure output of the pressure reduction valve (16) or to an output (38) of the first control valve device (10, 28, 30).

2. A direct braking device (1) according to claim 1, **characterised in that** the solenoid valve (22) takes the form of a 3/2-way solenoid valve which has a pressure input connected to the output (38) of the first control valve device (10), a further pressure input connected directly to the pressure output of the pressure reduction valve (16) and a pressure output connected to the control input (39) of the second control valve device (18).

3. A direct braking device (1) according to claim 1 or 2, **characterised in that** the brake actuation device (2) contains at least the following:
a) an electrical brake application circuit in which an electrical signal is generated in order to apply the brake during service braking when the operating member (4) is actuated from a neutral position (N) to a defined actuation path (B) in a direction dependent on the actuation period or the actuation path,
b) an electrical brake release circuit in which an electrical signal is generated in order to release the brake when the operating member (4) is actuated from the neutral position (N) to a defined actuation path (L) in a further direction dependent on the actuation period or the actuation path,
c) an electrical brake retaining circuit in which an electrical signal is generated in order to apply the brake during retaining or emergency braking when the operating member (4) is actuated in one or other direction beyond the respective defined actuation path.

4. A direct braking device according to claim 3, **characterised in that** the operating lever (4) can be actuated undetented from the neutral position (N) to the defined actuating path (B, L) and detented beyond the defined actuation path (BL, BR).

5. A direct braking device according to claim 3 or 4, **characterised in that** the solenoid valve (22) is activated by an electrical signal adjusted by the retaining brake circuit of the brake actuation device (2).

6. A direct braking device according to at least one of the preceding claims, **characterised in that** when the second control valve device (18) is activated by the further pneumatic control signal a wheel-slide protection device is simultaneously disabled.

7. A direct braking device according to at least one of the preceding claims, **characterised in that** the second control valve device (18) contains at least one relay valve which modulates a braking pressure dependent on the pneumatic control signal from the reservoir pressure (R).

## Revendications

1. Système (1) de frein direct d'un véhicule ferroviaire, dans lequel, pour serrer le frein, on injecte, dans au moins un cylindre (20) de frein, de l'air comprimé d'au moins un réservoir (14) d'air comprimé, et pour desserrer le frein, on met à l'atmosphère le au moins un cylindre (20) de frein, comportant ce qui suit :
a) un dispositif (2) d'actionnement de frein, comprenant au moins un organe (4) de manoeuvre, qui, en fonction de la position de l'organe (4) de manoeuvre, émet des signaux électriques de commande,
b) un dispositif (6) de frein direct électronique, dans lequel un appareil (8) électronique de commande commande, en fonction des signaux électriques de commande émis par le dispositif (2) d'actionnement du frein, un premier dispositif (18, 28, 30) de vanne de commande pour produire un signal de commande pneumatique régulé,
c) un dispositif (12) de frein direct électropneumatique, qui, en fonction des signaux de commande électriques émis par le dispositif (2) d'actionnement de frein, produit, à partir de la pression air d'un réservoir (14) d'air comprimé, un autre signal de commande pneumatique, comportant un détendeur (16), alimenté par le réservoir (14) d'air comprimé,
d) un deuxième dispositif (18) de vanne de commande, qui produit, en fonction d'un signal de commande pneumatique à partir d'une pression de réservoir déduite d'un réservoir (14) d'air comprimé, une pression de frein pour le au moins un cylindre de frein, dans lequel
e) il est prévu un dispositif (22) de vanne de commutation, qui achemine, au deuxième dispositif (18) de vanne de commande, le signal de commande pneumatique régulé du dispositif (6) de frein direct électronique ou l'autre signal de commande pneumatique du dispositif (12) de frein direct électropneumatique, **caractérisé en ce que**
f) le dispositif (22) de commutation comporte une électrovanne, qui peut être commandée électriquement par le dispositif (2) d'actionnement de frein et qui relie une entrée (39) de commande du deuxième dispositif (18) de vanne de commande, soit directement à une sortie de pression du détendeur (16), soit à une sortie (38) du premier dispositif (10, 28, 30) de vanne de commande.

2. Système de frein direct suivant la revendication 1, **caractérisé en ce que** l'électrovanne (22) est formée d'une électrovanne à 3/2 voies, par laquelle une entrée de pression est en liaison avec la sortie (38) du premier dispositif (10) de vanne de commande, une autre entrée de pression est en liaison directement avec la sortie de pression du détendeur (16) et une sortie de pression est en liaison avec l'entrée (39) de commande du deuxième dispositif (18) de vanne de commande.

3. Système de frein direct suivant la revendication 1 ou 2, **caractérisé en ce que** le dispositif (2) d'actionnement de frein comporte au moins ce qui suit :
a) un circuit électrique de serrage, dans lequel, lorsque l'organe (4) de manoeuvre est actionné, à partir d'une position (N) neutre jusqu'à à un trajet (B) d'actionnement défini dans un sens, en fonction de la durée d'actionnement ou du trajet d'actionnement, il est produit un signal électrique de serrage du frein dans le cadre d'un freinage de service,
b) un circuit électrique de desserrage de frein, dans lequel, lorsque l'organe (4) de manoeuvre est actionné à partir de la position (N) neutre jusqu'à un trajet (L) d'actionnement défini, dans un autre sens, en fonction de la durée d'actionnement ou du trajet d'actionnement, un signal électrique est produit pour desserrer le frein, ainsi que
c) un circuit électrique de frein de stationnement, dans lequel, lorsque l'organe (4) de manoeuvre est actionné dans le un sens ou dans l'autre sens, au-delà du trajet d'actionnement défini respectivement, un signal électrique de serrage du frein est produit dans le cadre d'un freinage de stationnement ou d'un freinage d'urgence.

4. Système de frein direct suivant la revendication 3, **caractérisé en ce que** le levier (4) de manoeuvre peut être actionné de la position (N) neutre jusqu'au trajet (B, L) d'actionnement défini en étant désencliqueté et en étant encliqueté au-delà du trajet (BL, BR) d'actionnement défini.

5. Système de frein direct suivant la revendication 3 ou 4, **caractérisé en ce que** l'électrovanne (22) est commandée par un signal électrique émis par le circuit de frein de stationnement du dispositif (2) d'actionnement de frein.

6. Système de frein direct suivant au moins l'une des revendications précédentes, **caractérisé en ce que**, lorsque le deuxième dispositif (18) de vanne de commande est commandé par l'autre signal de commande pneumatique, un dispositif anti enrayeur est mis en même temps hors service.

7. Système de frein direct suivant au moins l'une des revendications précédentes, **caractérisé en ce que** le deuxième dispositif (18) de vanne de commande comporte au moins une vanne relais, qui, en fonction du signal de commande pneumatique provenant de la pression (R) de réservoir, module une pression de frein.
